# FASCICULE DE BREVET EUROPEEN

(11) **EP 4 237 231 B1**
(45) Date de publication et mention de la délivrance du brevet: **03.12.2025**
(21) Numéro de dépôt: 21810410.7
(22) Date de dépôt: 25.10.2021
(51) Int. Cl.: B29C 73/02, B23P 6/00, F02C 7/045, F02K 1/82, B22F 5/00, B29C 73/10, B29C 73/26, B22F 10/25, B22F 7/06, B29C 64/118

(54) **PROCEDE DE REPARATION D'UNE PIECE POUR UNE TURBOMACHINE D'AERONEF**
VERFAHREN ZUR REPARATUR EINES TEILS FÜR EIN FLUGZEUGTURBINENTRIEBWERK
METHOD FOR REPAIRING A PART FOR AN AIRCRAFT TURBINE ENGINE

(30) Priorité: 28.10.2020 FR 2011045
(43) Date de publication de la demande: 06.09.2023
(73) Titulaire: SAFRAN AIRCRAFT ENGINES, 75015 Paris (FR)
(72) Inventeur: CHARLAS, Mathieu Julien, 77550 MOISSY-CRAMAYEL (FR); PAIXAO, Adrien Francis, 77550 MOISSY-CRAMAYEL (FR); TALIBART, Simon, 77550 MOISSY-CRAMAYEL (FR)
(74) Mandataire: Gevers & Orès
(86) Numéro de dépôt international: PCT/FR2021/051873
(87) Numéro de publication internationale: WO 2022/090660

(56) Documents cités:
- EP-A1- 2 930 011
- FR-A1- 3 013 634
- FR-A1- 3 075 690
- US-A1- 2015 275 687

## Description

### Domaine technique de l'invention

L'invention concerne le domaine technique des procédés de réparation d'une pièce pour une turbomachine d'aéronef, la pièce comprenant un panneau inférieur, un panneau supérieur et une âme présentant une structure en nid d'abeilles.

L'invention s'inscrit dans le domaine technique général des procédés de réparation, par fabrication additive, des pièces pour les turbomachines d'aéronef.

### Arrière-plan technique

L'état de la technique est illustré par les documents US-A1-2015275687 et EP-A1-2 930 011 qui révèle le préambule de la revendication 1.

Les pièces en matériau composite sont largement utilisées dans l'industrie aéronautique en raison de leur faible masse et de leur bonne performance mécanique comparées aux pièces en matériau métallique. Les pièces sont par exemple utilisées pour équiper les turbomachines d'aéronef.

Les pièces en matériau composite présentent une structure en sandwich et comprennent typiquement un panneau inférieur, un panneau supérieur et une âme présentant une structure en nid d'abeilles agencée entre le panneau inférieur et le panneau supérieur. Le panneau supérieur et le panneau inférieur sont typiquement formés d'un matériau composite à matrice organique (connu sous l'acronyme CMO, pour « composite à matrice organique »). Le matériau composite comprend ainsi une matrice organique formée d'un matériau polymérique tel qu'un thermoplastique ou un thermodurcissable et des fibres de renfort noyés dans la matrice tels que des fibres de carbone. L'âme est généralement formée d'un matériau métallique et permet de renforcer la résistance mécanique de la pièce vis-à-vis des contraintes appliquées sur la pièce lors du fonctionnement de la turbomachine tout en garantissant un faible poids.

La matrice en matériau polymérique thermodurcissable est généralement préférée pour la fabrication des pièces destinées à une turbomachine. Cependant, le coût d'un tel matériau est élevé et l'impact environnemental important. Ainsi, il est nécessaire d'assurer la longévité des pièces formées d'un matériau composite présentant une matrice en matériau polymérique thermodurcissable.

En fonctionnement, la pièce peut être dégradée dans son épaisseur et peut ainsi présenter une dégradation aussi bien sur le panneau inférieur et/ou supérieur que dans l'âme. Il est préférable de réparer la pièce dégradée plutôt que de la remplacer entièrement par une pièce saine afin de rentabiliser le coût de fabrication de cette pièce et de minimiser son impact environnemental.

Il est connu un procédé de fabrication dans lequel une résine est disposée entre le panneau supérieur et inférieur à la place de l'âme dégradée. La résine permet ainsi de maintenir les fonctions mécaniques et les caractéristiques dimensionnelles de la pièce. Cependant, la pièce n'est pas restaurée car une partie de l'âme ne présente plus la structure en nid d'abeilles. Aussi, la présence de la résine alourdie la pièce. Enfin, la résine crée des hétérogénéités dans la structure de la pièce, formant des points de faiblesse mécanique.

Par ailleurs, il est également connu un procédé de réparation dans lequel l'âme de la pièce dégradée est d'abord retirée. Puis, un organe de remplacement est fourni par fabrication additive. L'organe de remplacement est ensuite agencé dans la pièce, à la place de la partie de l'âme dégradée pour restaurer la pièce. L'organe de remplacement est fixé à la pièce via des éléments de connexion. Un tel procédé est par exemple illustré par le document FR-A1-3 075 690.

Un tel procédé présente l'inconvénient d'introduire des éléments de connexion, qui ne sont pas présents dans la pièce initiale. Ainsi, la pièce est alourdie et plus complexe. Aussi, il est nécessaire de fournir un organe de remplacement ayant exactement la structure de l'âme retirée ce qui complexifie grandement le procédé de réparation. L'agencement de l'organe de remplacement dans la pièce requiert également une grande dextérité de la part des opérateurs. Une telle opération est fastidieuse ce qui rend le procédé de réparation long et coûteux.

Dans ce cadre, il existe un besoin de fournir un procédé de réparation qui soit simple à mettre en œuvre et qui permette de restaurer une pièce dont le panneau inférieur et/ou supérieur et l'âme présentant une structure en nid d'abeille, sont dégradés, tout en préservant sa structure et ses propriétés mécaniques.

### Résumé de l'invention

A cet effet, l'invention propose un procédé de réparation d'une pièce pour une turbomachine d'aéronef, la pièce comprenant un panneau inférieur, un panneau supérieur et une âme présentant une structure en nid d'abeilles agencée entre le panneau inférieur et le panneau supérieur, la pièce comprenant une partie saine et une partie au moins partiellement dégradée, le procédé de réparation comprenant les étapes suivantes :
(a) retirer au moins une partie du panneau inférieur ou du panneau supérieur d'une zone à réparer;
(b) retirer au moins une partie de l'âme de la zone à réparer;
(c) reformer l'âme dans la zone à réparer directement sur la pièce par fabrication additive;
(d) reformer le panneau inférieur ou le panneau supérieur dans la zone à réparer directement sur la pièce.

Le procédé de réparation selon l'invention permet de reformer l'âme et le panneau inférieur et/ou supérieur directement sur la pièce. La fabrication additive permet l'impression de la structure en nid d'abeille formant l'âme à restaurer à l'identique, directement sur la pièce. Par conséquent, la pièce ne comprend pas d'éléments de fixation supplémentaires puisque l'âme et le panneau supérieur et/ou inférieur sont directement fabriqués sur la pièce. Le procédé permet également de s'affranchir d'une étape fastidieuse d'agencement d'un organe de remplacement dans la pièce et de connexion de cet organe avec la pièce. Aussi, la pièce réparée n'est pas alourdie. Les propriétés structurelles et mécaniques de la pièce sont également préservées.

Le procédé selon l'invention peut comprendre une ou plusieurs des caractéristiques suivantes, prises isolément les unes des autres ou en combinaison les unes avec les autres :
- l'étape (c) comprend les sous étapes suivantes :
   (c1) fournir un modèle numérique comprenant des coordonnées spatiales de la partie saine de l'âme;
   (c2) alimenter un dispositif de fabrication additive avec un premier matériau de réparation, ce dispositif comprenant une buse;
   (c3) déposer le premier matériau de réparation selon les coordonnées spatiales acquises à l'étape (c1) pour reformer l'âme,
- l'âme est formée d'un matériau identique au premier matériau de réparation,
- le premier matériau de réparation est choisi parmi les matériaux métalliques tel que l'aluminium,
- le panneau inférieur et/ou le panneau supérieur comprend une pluralité de plis,
- l'étape (b) de retrait d'au moins une partie de l'âme est réalisée selon un profil selon une section transversale de la pièce en forme d'ellipse, l'ellipse présentant un petit axe et un grand axe,
- la buse est cylindrique et l'ellipse présente une hauteur mesurée selon le petit axe supérieure ou égale au rayon de la buse,
- l'ellipse présente une largeur mesurée selon le grand axe supérieure ou égale à deux fois le rayon de la buse,
- la structure en nid d'abeilles présente une pluralité de cellules, les cellules étant séparées par une distance D, la buse présentant un diamètre supérieur ou égal à deux fois la distance D,
- le panneau inférieur et le panneau supérieur sont formés d'un matériau composite.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue en coupe transversale d'un exemple d'une pièce ;
[Fig.2] la figure 2 est une vue en coupe transversale de la pièce de la figure 1 à réparer ;
[Fig.3a] la figure 3a est une vue en coupe transversale de la pièce de la figure 2 dans une première étape du procédé selon l'invention;
[Fig.3b] la figure 3b est une vue de dessus de la figure 2;
[Fig.4] la figure 4 est une vue en coupe transversale de la pièce de la figure 2 dans une deuxième étape du procédé selon l'invention ;
[Fig.5a] la figure 5a est une vue en coupe transversale de la pièce de la figure 2 dans une troisième étape du procédé selon l'invention ;
[Fig.5b] la figure 5b est une vue de dessus de la figure 5a ;
[Fig.6a] la figure 6a est une vue en coupe transversale de la pièce de la figure 2 dans une troisième étape du procédé selon un premier exemple de réalisation ;
[Fig.6b] la figure 6b est une vue en coupe transversale de la pièce de la figure 2 dans une troisième étape du procédé selon un second exemple de réalisation ;
[Fig.7] la figure 7 est une vue en coupe transversale de la pièce de la figure 2 dans une quatrième étape du procédé selon l'invention.

### Description détaillée de l'invention

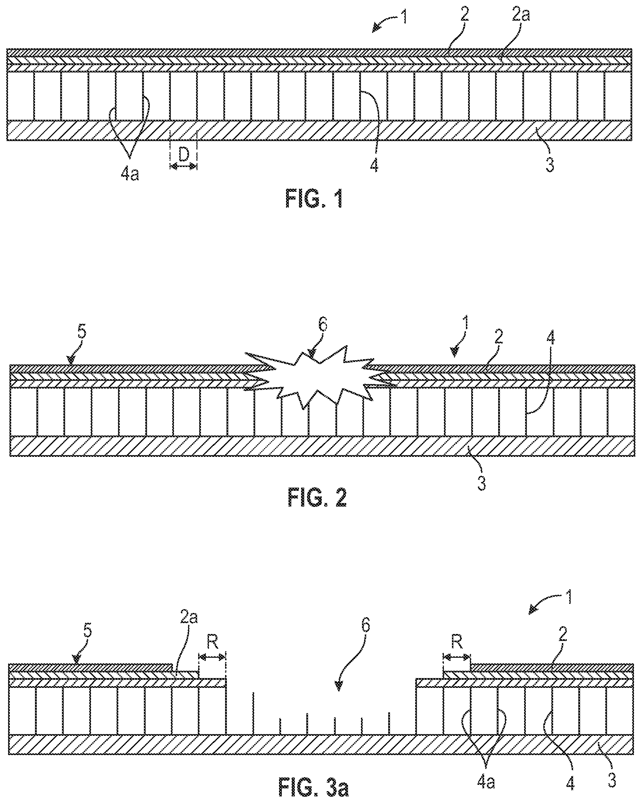

La figure 1 représente un exemple en coupe transversale d'une pièce 1 selon l'invention. La pièce 1 est destinée à équiper une turbomachine d'aéronef. La pièce 1 est par exemple un panneau acoustique.

La pièce 1 comprend un panneau supérieur 2, un panneau inférieur 3 et une âme 4 agencée entre le panneau supérieur 2 et le panneau inférieur 3.

Le panneau supérieur 2 et le panneau inférieur 3 présentent respectivement une épaisseur comprise entre 0.1 mm et 15 mm. Le panneau supérieur 2 et/ou le panneau inférieur 3 sont formés d'un matériau composite. Le panneau supérieur 2 et/ou le panneau inférieur 3 comprennent par exemple une pluralité de plis 2a, par exemple entre 2 et 15 plis. Les plis 2a représentent des couches formées du matériau composite. Dans l'exemple de la figure 1, le panneau inférieur 3 comprend un seul pli 2a.

Le matériau composite comprend une matrice organique et des fibres de renfort noyées dans la matrice. La matrice est par exemple formée d'un matériau polymérique thermoplastique ou thermodurcissable. Le matériau polymérique thermodurcissable est par exemple une résine époxy. Les fibres de renfort sont par exemple des fibres de carbone.

L'âme 4 est agencée entre le panneau supérieur 2 et le panneau inférieur 3. L'âme 4 présente une épaisseur supérieure à l'épaisseur du panneau supérieur 2 et à l'épaisseur du panneau inférieur 3. L'épaisseur de l'âme 4 est par exemple comprise entre 5 mm et 20 mm. L'âme 4 présente une structure en nid d'abeilles. La structure en nid d'abeille est formée d'un matériau choisi parmi les matériaux métalliques tels que l'aluminium. Selon un autre exemple de réalisation, la structure en nid d'abeille est formée d'un matériau choisi parmi les matériaux polymériques tel que le polypropylène ou encore les polyamides aromatiques. La structure en nid d'abeilles présente une pluralité de cellules 4a. Les cellules 4a présentent une forme tubulaire de section hexagonale par exemple. Les cellules 4a sont séparées par une distance D comprise entre 1 mm et 20 mm.

En service, la pièce 1 est soumise à des efforts importants et des frottements avec d'autres pièces de la turbomachine par exemple. Ces efforts ou frottements peuvent conduire à des endommagements de la pièce 1 qui doivent être réparés pour rendre de nouveau la pièce 1 opérationnelle.

Ainsi, comme visible sur la figure 2, la pièce 1 comprend une partie saine 5 et une partie au moins partiellement dégradée 6. La partie au moins partiellement dégradée 6 forme une zone à réparer. La partie au moins partiellement dégradée 6 s'étend, sur l'exemple de la figure 2, du panneau supérieur 2 à une partie de l'épaisseur de l'âme 4. Selon un autre exemple non représenté, la partie au moins partiellement dégradée 6 s'étend du panneau inférieur 3 à une partie de l'épaisseur de l'âme ou du panneau supérieur 2 au panneau inférieur 3 traversant ainsi toute l'épaisseur de l'âme 4.

La pièce 1 est réparée selon un procédé de réparation qui va maintenant être décrit sur la base des figures 3a à 7.

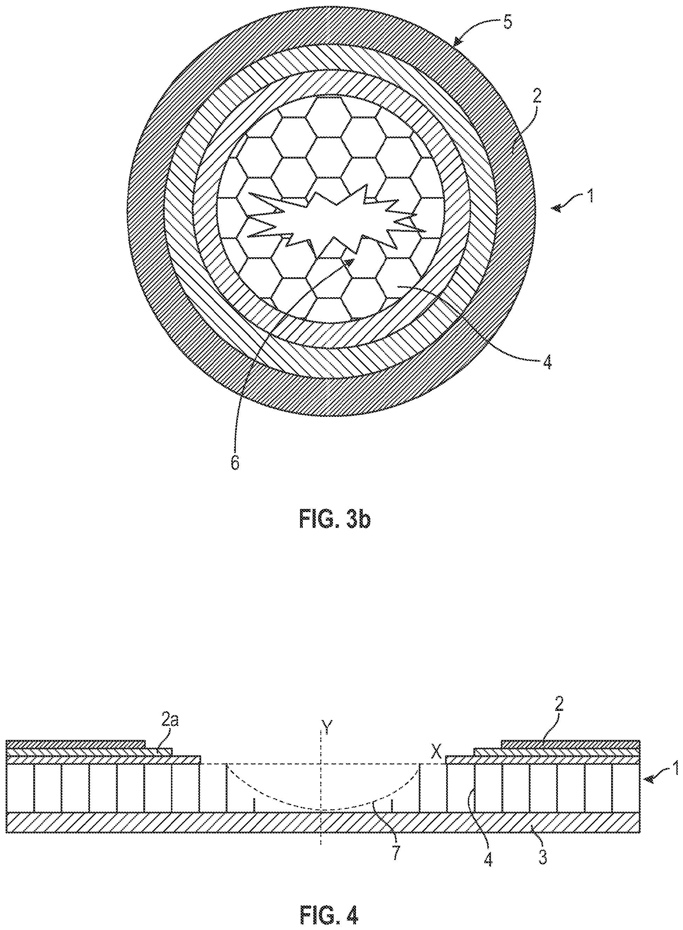

Comme représenté sur les figures 3a et 3b, le procédé de réparation selon l'invention comprend une première étape (a) de retrait d'au moins une partie du panneau inférieur 3 ou du panneau supérieur 2 de la zone à réparer. L'étape (a) est par exemple réalisée par usinage du panneau inférieur 3 ou du panneau supérieur 2. Ainsi, comme mieux visible sur l'exemple de la figure 3b, l'âme 4 est dépourvue du panneau supérieur 2 sur la zone à réparer. Le retrait est réalisé par retrait d'au moins une partie de chaque pli 2a. Le retrait de chaque pli 2a est réalisé de manière dégradé c'est-à-dire qu'il existe un retrait R entre chaque pli 2a.

Dans une deuxième étape (b) du procédé représentée par exemple sur la figure 4, au moins une partie de l'âme 4 est retirée de la zone à réparer. Le retrait de l'âme 4 dans l'étape (b) est par exemple réalisé par usinage de la structure en nid d'abeilles. Avantageusement, l'étape (b) de retrait d'au moins une partie de l'âme 4 est réalisée selon un profil selon la section transversale de la pièce en forme d'ellipse 7, l'ellipse 7 présentant un petit axe Y et un grand axe X. L'étape (b) de retrait de l'âme 4 permet de connaitre la taille initiale d'une cellule 4a et d'assurer la vérification finale de la réparation.

A l'issue des étapes (a) et (b) du procédé, la pièce 1 présente la zone à réparer dépourvue du panneau inférieur 3 ou supérieur 2 et d'au moins une partie de l'âme 4 et une partie saine 5 entourant la zone à réparer. La partie saine 5 comprend le panneau inférieur 3, le panneau supérieur 2 et l'âme 4 entre le panneau inférieur 3 et le panneau supérieur 2.

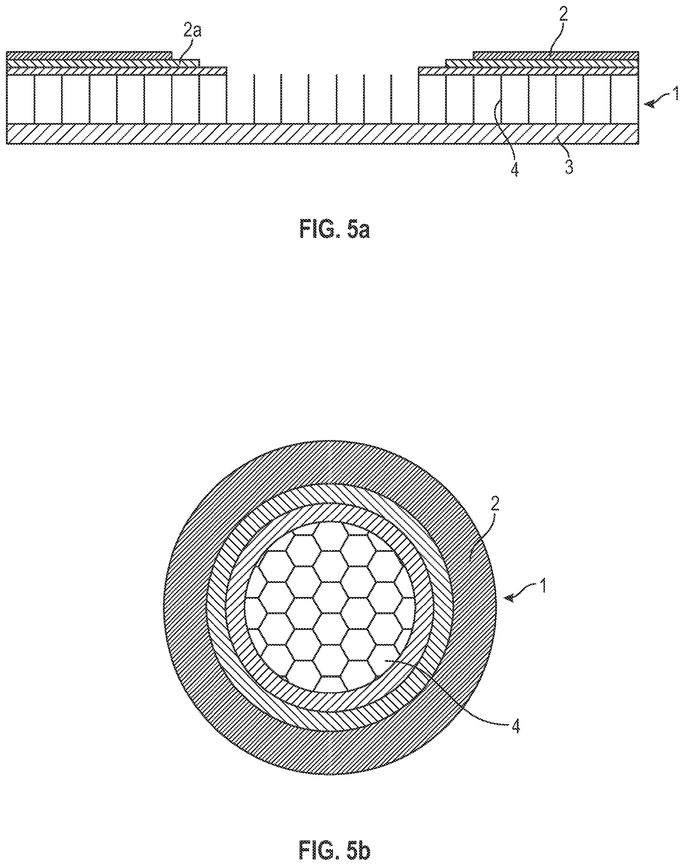

Ensuite, selon une troisième étape (c) du procédé représentée à titre d'exemple sur la figure 5a, l'âme 4 est reformée dans la zone à réparer directement sur la pièce 1 par fabrication additive. Le procédé de fabrication additive est par exemple un procédé de dépôt sous énergie concentrée connu sous l'acronyme DED pour « Direct Energy Deposition » en langue anglaise, notamment lorsque l'âme 4 est métallique. Selon un autre exemple, le procédé de fabrication additive est un procédé par dépôt de matière fondue connu sous l'acronyme FDM pour « Fused Deposition Modeling », notamment lorsque l'âme 4 est polymérique.

Avantageusement, l'étape (c) comprend une sous-étape (c1) de fourniture d'un modèle numérique comprenant des coordonnées spatiales de la partie saine 5 de l'âme 4. L'étape (c) comprend en outre une sous étape (c2) d'alimentation d'un dispositif 8 de fabrication additive avec un premier matériau de réparation.

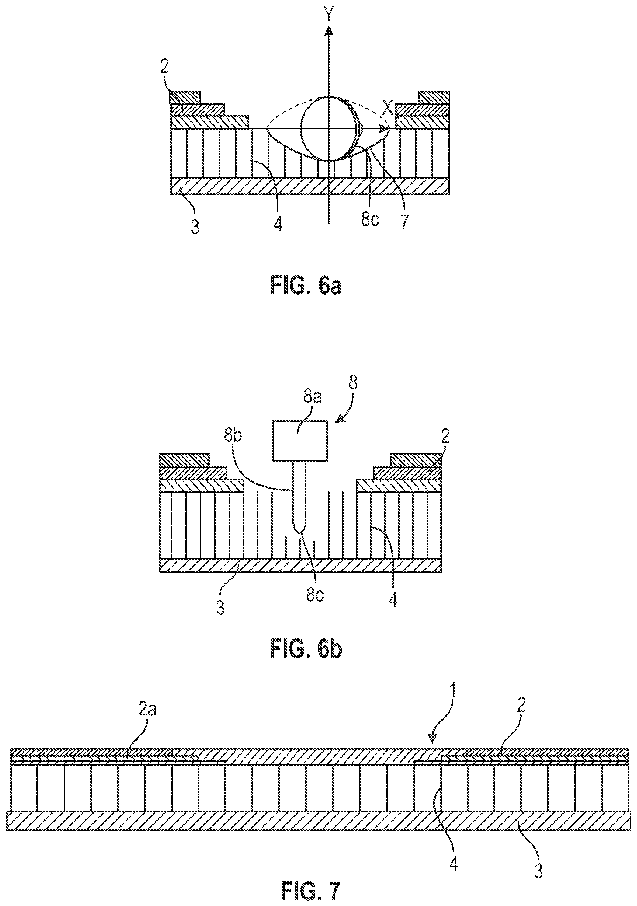

Le dispositif 8 de fabrication additive est par exemple représenté sur les figures 6a et 6b. Il comprend une buse 8c et par exemple un moteur 8a et une tête chauffante 8b. La buse 8c est par exemple montée sur la tête chauffante 8b. La buse 8c est par exemple cylindrique ou conique.

Selon un premier exemple de réalisation représenté sur la figure 6a, l'ellipse 7 selon laquelle le retrait a été réalisé présente une hauteur mesurée selon le petit axe Y supérieure ou égale au rayon de la buse 8c. Avantageusement, l'ellipse 7 présente une largeur mesurée selon le grand axe X supérieure ou égale à deux fois le rayon de la buse 8c.

Selon un deuxième exemple de réalisation représenté sur la figure 6b dans lequel la buse 8c est déportée par rapport au moteur 8a, la buse 8c présente un diamètre supérieur ou égal à deux fois la distance D séparant les cellules 4a.

Avantageusement, le premier matériau de réparation est identique au matériau formant l'âme 4. Ceci permet d'améliorer la force de liaison entre l'âme 4 de la partie saine et l'âme 4 réparée. Le premier matériau de réparation est ainsi par exemple formé d'un matériau métallique tel qu'un aluminium.

Ensuite, une sous étape (c3) est réalisée dans laquelle le premier matériau de réparation est déposé sur la pièce 1 selon les coordonnées spatiales acquises à l'étape (c1) pour reformer l'âme 4. Ainsi, comme représenté sur les figures 5a et 5b, l'âme 4 est restaurée.

Le procédé selon l'invention comprend ensuite une étape (d) de reformation du panneau inférieur 3 ou du panneau supérieur 2 dans la zone à réparer directement sur la pièce 1. L'étape (d) comprend avantageusement une sous étape (d1) de reformation d'un premier pli 2a. La sous étape (d1) est répétée selon le nombre de plis 2a formant le panneau inférieur 3 ou supérieur 2. Le retrait des plis 2a durant l'étape (a) ayant été réalisé de manière dégradée, la résistance mécanique de la pièce 1 est améliorée.

La figure 7 illustre un exemple dans lequel le panneau supérieur 2 est reformé.

Ainsi, l'invention permet de restaurer la pièce 1 dans son intégralité sans ajout de pièces de connexion qui alourdissent et complexifient la pièce 1. Aussi, les propriétés mécaniques de la pièce 1 sont préservées puisque la structure complète de la pièce 1 est restaurée.

## Revendications

1. Procédé de réparation d'une pièce (1) pour une turbomachine d'aéronef, la pièce (1) comprenant un panneau inférieur (3), un panneau supérieur (2) et une âme (4) présentant une structure en nid d'abeilles agencée entre le panneau inférieur (3) et le panneau supérieur (2), la pièce (1) comprenant une partie saine (5) et une partie au moins partiellement dégradée (6), le procédé de réparation comprenant les étapes suivantes :
(a) retirer au moins une partie du panneau inférieur (3) ou du panneau supérieur (2) d'une zone à réparer;
(b) retirer au moins une partie de l'âme (4) de la zone à réparer; le procédé étant **caractérisé par** les étapes suivantes :
(c) reformer l'âme (4) dans la zone à réparer directement sur la pièce (1) par fabrication additive;
(d) reformer le panneau inférieur (3) ou le panneau supérieur (2) dans la zone à réparer directement sur la pièce (1).

2. Procédé selon la revendication 1, **caractérisé en ce que** l'étape (c) comprend les sous étapes suivantes :
(c1) fournir un modèle numérique comprenant des coordonnées spatiales de la partie saine (5) de l'âme (4);
(c2) alimenter un dispositif (8) de fabrication additive avec un premier matériau de réparation, ce dispositif comprenant une buse (8c);
(c3) déposer le premier matériau de réparation selon les coordonnées spatiales acquises à l'étape (c1) pour reformer l'âme (4).

3. Procédé selon la revendication précédente, **caractérisé en ce que** l'âme (4) est formée d'un matériau identique au premier matériau de réparation.

4. Procédé selon l'une des revendications 2 ou 3, **caractérisé en ce que** le premier matériau de réparation est choisi parmi les matériaux métalliques tel que l'aluminium.

5. Procédé selon l'une quelconque des revendications précédentes, **caractérisé en ce que** le panneau inférieur (3) et/ou le panneau supérieur (2) comprend une pluralité de plis (2a).

6. Procédé selon l'une quelconque des revendications précédentes, **caractérisé en ce que** l'étape (b) de retrait d'au moins une partie de l'âme (4) est réalisée selon un profil selon une section transversale de la pièce en forme d'ellipse (7), l'ellipse présentant un petit axe (Y) et un grand axe (X).

7. Procédé selon la revendication 6 en combinaison avec la revendication 2, **caractérisé en ce que** la buse (8c) est cylindrique et **en ce que** l'ellipse (7) présente une hauteur mesurée selon le petit axe (Y) supérieure ou égale au rayon de la buse (8c).

8. Procédé selon la revendication précédente, **caractérisé en ce que** l'ellipse (7) présente une largeur mesurée selon le grand axe (X) supérieure ou égale à deux fois le rayon de la buse (8c).

9. Procédé selon l'une des revendications 2 à 6, **caractérisé en ce que** la structure en nid d'abeilles présente une pluralité de cellules (4a), les cellules (4a) étant séparées par une distance D, la buse (8c) présentant un diamètre supérieur ou égal à deux fois la distance D.

10. Procédé selon l'une quelconque des revendications précédentes, **caractérisé en ce que** le panneau inférieur (3) et le panneau supérieur (2) sont formés d'un matériau composite.

## Patentansprüche

1. Verfahren zur Reparatur eines Teils (1) für ein Turbotriebwerk eines Luftfahrzeugs, wobei das Teil (1) eine untere Platte (3), eine obere Platte (2) und einen Kern (4) umfasst, der eine zwischen der unteren Platte (3) und der oberen Platte (2) angeordnete Wabenstruktur aufweist, wobei das Teil (1) einen unbeschädigten Abschnitt (5) und einen mindestens teilweise beschädigten Abschnitt (6) umfasst, wobei das Verfahren zur Reparatur die folgenden Schritte umfasst:
(a) Entnehmen mindestens eines Abschnitts der unteren Platte (3) oder der oberen Platte (2) eines zu reparierenden Bereichs;
(b) Entnehmen mindestens eines Abschnitts des Kerns (4) des zu reparierenden Bereichs;
wobei das Verfahren durch die folgenden Schritte gekennzeichnet ist:
(c) Neubilden des Kerns (4) in der zu reparierenden Zone durch additive Fertigung direkt auf dem Teil (1);
(d) Neubilden der unteren Platte (3) oder der oberen Platte (2) in dem zu reparierenden Bereich direkt auf dem Teil (1).

2. Verfahren nach Anspruch 1, **dadurch gekennzeichnet, dass** der Schritt (c) die folgenden Unterschritte umfasst:
(c1) Bereitstellen eines numerischen Modells, das die räumlichen Koordinaten des unbeschädigten Abschnitts (5) des Kerns (4) umfasst;
(c2) Versorgen einer Vorrichtung (8) zur additiven Fertigung mit einem ersten Reparaturmaterial, wobei diese Vorrichtung eine Düse (8c) umfasst;
(c3) Abscheiden des ersten Reparaturmaterials gemäß den räumlichen Koordinaten, die in Schritt (c1) erfasst wurden, um den Kern (4) neu zu bilden.

3. Verfahren nach dem vorstehenden Anspruch, **dadurch gekennzeichnet, dass** der Kern (4) aus einem Material gebildet ist, das identisch ist mit dem Reparaturmaterial.

4. Verfahren nach einem der Ansprüche 2 oder 3, **dadurch gekennzeichnet, dass** das erste Reparaturmaterial ausgewählt ist aus metallischen Materialien wie Aluminium.

5. Verfahren nach einem der vorstehenden Ansprüche, **dadurch gekennzeichnet, dass** die untere Platte (3) und/oder die obere Platte (2) eine Vielzahl von Lagen (2a) umfasst.

6. Verfahren nach einem der vorstehenden Ansprüche, **dadurch gekennzeichnet, dass** der Schritt (b) der Entnahme mindestens eines Abschnitts des Kerns (4) gemäß einem Profil gemäß eines Querschnitts des Teils in Ellipsenform (7) durchgeführt wird, wobei die Ellipse eine kleine Achse (Y) und eine große Achse (X) aufweist.

7. Verfahren nach Anspruch 6 in Kombination mit Anspruch 2, **dadurch gekennzeichnet, dass** die Düse (8c) zylindrisch ist und dadurch, dass die Ellipse (7) eine gemäß der kleinen Achse (Y) gemessene Höhe größer als oder gleich dem Radius der Düse (8c) aufweist.

8. Verfahren nach dem vorstehenden Anspruch, **dadurch gekennzeichnet, dass** die Ellipse (7) eine gemäß der großen Achse (X) gemessene Breite von größer als oder gleich zweimal den Radius der Düse (8c) aufweist.

9. Verfahren nach einem der Ansprüche 2 bis 6, **dadurch gekennzeichnet, dass** die Wabenstruktur eine Vielzahl von Zellen (4a) aufweist, wobei die Zellen (4a) um einen Abstand D getrennt sind, wobei die Düse (8c) einen Durchmesser größer als oder gleich zweimal den Abstand D aufweist.

10. Verfahren nach einem der vorstehenden Ansprüche, **dadurch gekennzeichnet, dass** die untere Platte (3) und die obere Platte (2) aus einem Kompositmaterial gebildet sind.

## Claims

1. A method for repairing a part (1) for an aircraft turbine engine, the part (1) comprising a lower panel (3), an upper panel (2), and a core (4) having a honeycomb structure arranged between the lower panel (3) and the upper panel (2), the part (1) comprising an unimpaired portion (5) and an at least partially impaired portion (6), the repair method comprising the following steps of:
(a) removing at least one portion of the lower panel (3) or upper panel (2) from an area to be repaired;
(b) removing at least one portion of the core (4) from the area to be repaired; the method being **characterized in that** it comprises the following steps:
(c) reforming the core (4) in the area to be repaired directly on the part (1) by additive manufacturing;
(d) reforming the lower panel (3) or the upper panel (2) in the area to be repaired directly on the part (1).

2. The method according to claim 1, **characterised in that** the step (c) comprises the following substeps of:
(c1) providing a digital model comprising spatial coordinates of the unimpaired portion (5) of the core (4);
(c2) supplying a first repair material to an additive manufacturing device (8), this device comprises a nozzle (8c);
(c3) depositing the first repair material according to the spatial coordinates acquired in step (c1) to reform the core (4).

3. The method according to the preceding claim, **characterised in that** the core (4) is formed of a material identical to the first repair material.

4. The method according to one of claims 2 or 3, **characterised in that** the first repair material is selected from metallic materials such as aluminium.

5. The method according to any one of the preceding claims, **characterised in that** the lower panel (3) and/or the upper panel (2) comprises a plurality of plies (2a).

6. The method according to any one of the preceding claims, **characterised in that** the step (b) of removing at least one portion of the core (4) is carried out according to a profile in a cross-section of the part in the form of an ellipse (7), the ellipse having a minor axis (Y) and a major axis (X).

7. The method according to claim 6 in combination with the claim 2, **characterised in that** the nozzle (8c) is cylindrical and **in that** the ellipse (7) has a height measured along the minor axis (Y) greater than or equal to the radius of the nozzle (8c).

8. The method according to the preceding claim, **characterised in that** the ellipse (7) has a width measured along the major axis (X) greater than or equal to twice the radius of the nozzle (8c).

9. The method according to one of claims 2 to 6, **characterised in that** the honeycomb structure has a plurality of cells (4a), the cells (4a) being separated by a distance D, the nozzle (8c) having a diameter greater than or equal to twice the distance D.

10. The method according to any one of the preceding claims, **characterised in that** the lower panel (3) and the upper panel (2) are made of a composite material.
